(19) Europäisches Patentamt
European Patent Office
Office européen des brevets

(11) **EP 4 614 627 A1**

(12) **EUROPEAN PATENT APPLICATION**
published in accordance with Art. 153(4) EPC

(43) Date of publication:
**10.09.2025 Bulletin 2025/37**

(21) Application number: **24840107.7**

(22) Date of filing: **11.07.2024**

(51) International Patent Classification (IPC):
*H01M 4/66* (2006.01)   *H01M 4/134* (2010.01)
*H01M 4/48* (2010.01)   *H01M 4/62* (2006.01)
*H01M 10/052* (2010.01)   *H01M 4/02* (2006.01)

(52) Cooperative Patent Classification (CPC):
Y02E 60/10

(86) International application number:
**PCT/KR2024/009933**

(87) International publication number:
**WO 2025/014297 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 KR 20230090369**

(71) Applicant: **LG Energy Solution, Ltd.**
**Seoul 07335 (KR)**

(72) Inventors:
• **KIM, Sehoon**
**Daejeon 34122 (KR)**
• **JUNG, Hyeran**
**Daejeon 34122 (KR)**
• **LEE, Kyungmin**
**Daejeon 34122 (KR)**
• **LEE, Su Rim**
**Daejeon 34122 (KR)**

(74) Representative: **Plasseraud IP**
**104 Rue de Richelieu**
**CS92104**
**75080 Paris Cedex 02 (FR)**

(54) **NEGATIVE ELECTRODE FOR LITHIUM SECONDARY BATTERY, METHOD FOR MANUFACTURING NEGATIVE ELECTRODE FOR LITHIUM SECONDARY BATTERY, AND LITHIUM SECONDARY BATTERY COMPRISING NEGATIVE ELECTRODE**

(57)   The present application relates to a negative electrode for a secondary battery; a method for manufacturing a negative electrode for a lithium secondary battery; and a lithium secondary battery comprising a negative electrode, the secondary battery negative electrode being characterized by comprising a negative electrode current collector layer and a negative electrode active material layer provided on one side or both sides of the negative electrode current collector layer, wherein one side or both sides of the negative electrode current collector layer contains a coating layer, the coating layer comprises a coating layer composition, and the coating layer comprises 95 parts by weight or more of lithium titanate represented by the following formula 1 per 100 parts by weight of the coating layer composition. [Formula 1] $Li_aTi_bO_c$ (In formula 1, a is an integer of 1 to 4, b is an integer of 1 to 5, and c is an integer of 2 to 14.)

[Figure 1]

**Description**

[DESCRIPTION]

[Technical Field]

The present application claims priority to and the benefit of Korean Patent Application No. 10-2023-0090369 filed in the Korean Intellectual Property Office on July 12, 2023, the entire contents of which are incorporated herein by reference.

The present application relates to a negative electrode for a lithium secondary battery, a method for manufacturing a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and increased demand for mobile devices, demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

In particular, in response to the demand for high-density energy batteries in recent years, research is being actively conducted on a method for increasing a capacity by using a silicon-based compound such as Si/C or SiOx having a capacity 10-fold or higher than that of a graphite-based material, in combination as a negative electrode active material. When compared with graphite that is typically used, however, the silicon-based compound that is a high-capacity material is excellent in capacity characteristic itself but undergoes rapid volume expansion during a charging process to disconnect a conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode, and reactions proceed on the surface, so that degradation in surface is accelerated, and therefore, the performance needs to be improved in terms of battery cycle.

Additionally, the use of the silicon-based negative electrode is necessary due to the above-described advantages, but the silicon-based negative electrode also has the disadvantage of being vulnerable to thermal runaway in addition to the issues described above. That is, when the silicon-based negative electrode operates in a lithium secondary battery, an exothermic reaction occurs due to an alloying reaction between metals, which accelerates thermal runaway and poses a risk of explosion.

To solve this problem, various methods are being researched, such as adopting a double-layered negative electrode active material layer and improving the negative electrode active material for preventing thermal runaway. However, these methods can, on the contrary, lower battery performance, thereby limiting their application and hindering the commercialization of negative electrode batteries with a high content of silicon-based compounds. Moreover, a method that can dramatically resolve the problem of thermal runaway in silicon-based active materials has not yet been developed.

Therefore, it is necessary to develop a negative electrode for a lithium secondary battery, which can secure capacity characteristics and energy density while resolving the problem of thermal runaway by using a silicon-based negative electrode.

Citation List

(Patent Literature 1) Japanese Patent Application Publication No. 2009-080971

[Detailed Description of the Invention]

[Technical Problem]

When applying a silicon-based negative electrode to secure capacity characteristics and energy density, it was found that the degree of alloy formation reaction of Li-Si-Cu can be controlled if a coating layer containing LTO is formed on one surface or both surfaces of a negative electrode current collector layer.

That is, when a cell is exposed to high temperatures, decomposition occurs easily, and the exothermic reaction is accelerated due to the formation of an alloy of Si and Cu after the decomposition, leading to the thermal runaway issue. However, the present applicant has found that the above-described problems can be addressed when lithium titanium oxide is uniformly coated on one surface or both surfaces of the negative electrode current collector layer. Accordingly, the present application relates to a negative electrode for a lithium secondary battery that can prevent thermal runaway, a method for manufacturing a negative electrode for a lithium secondary battery, and a lithium secondary battery including a negative electrode.

[Technical Solution]

An exemplary embodiment of the present specification provides a negative electrode for a lithium secondary battery, including: a negative electrode current collector layer; and a negative electrode active material layer provided on one surface or both surfaces of the negative electrode current collector layer; wherein one surface or both surfaces of the negative electrode current collector layer include a coating layer, and the coating layer includes a coating layer composition, and includes 95 parts by weight or more of lithium titanium oxide represented by Formula 1 based on 100 parts by weight of the coating layer composition.

$$[\text{Formula 1}] \qquad Li_aTi_bO_c$$

in Formula 1,

　　　a is an integer of 1 to 4,
　　　b is an integer of 1 to 5, and
　　　c is an integer of 2 to 14.

Another exemplary embodiment provides a method for manufacturing a negative electrode for a lithium secondary battery, the method including: preparing a negative electrode current collector layer; forming a coating layer on one surface or both surfaces of the negative electrode current collector layer; and forming a negative electrode active material layer on top of the negative electrode current collector layer on which the coating layer is formed, wherein the forming the coating layer includes electrolyzing lithium titanium oxide represented by Formula 1 above to make it into an ionic state; and reducing the lithium titanium oxide in the ionic state on a surface of the negative electrode current collector layer.

Lastly, an exemplary embodiment of the present application provides a lithium secondary battery including: a positive electrode; the negative electrode for a lithium secondary battery according to the present application; a separator provided between the positive electrode and the negative electrode; and an electrolyte.

[Advantageous Effects]

The negative electrode for a lithium secondary battery according to an exemplary embodiment of the present invention includes the coating layer on one surface or both surfaces of the negative electrode current collector layer, and particularly, includes 95 parts by weight or more of lithium titanium oxide based on 100 parts by weight of the coating layer composition.

In the related art, the lithium titanium oxide is mixed with a binder and a conductive material, and the mixture is coated on the negative electrode current collector layer. In this case, when the cell is exposed to high temperatures, decomposition occurs easily, and the formation of an alloy of Si and Cu after decomposition cannot be controlled, accelerating the exothermic reaction and posing a significant issue.

However, according to the present application, 95 parts by weight or more of lithium titanium oxide based on 100 parts by weight of the coating layer composition is included. The lithium titanium oxide itself has a melting point of 1500°C or higher and exhibits high thermal stability, so it can be stable even at high temperatures and can prevent and control the alloy formation reaction of Li-Si-Cu, thereby addressing the inherent thermal stability issues of silicon-based negative electrodes.

In addition, the negative electrode for a lithium secondary battery according to the present application is formed by electrolysis so as to include 95 parts by weight or more of lithium titanium oxide in the coating layer without the use of a binder or conductive material. That is, lithium titanium oxide is electrolyzed and made into an ionic state, and then reduced on the surface of the negative electrode current collector to form a coating layer. Through this manufacturing method, a coating layer made of lithium titanium oxide can be formed, and thus the thermal runaway issue in a silicon-based negative electrode can be addressed.

As a result, the negative electrode for a lithium secondary battery according to the present invention maximizes the capacity characteristics and energy density by using the silicon-based active material, and uses the coating layer including lithium titanium oxide through a specific manufacturing process in order to address the thermal runaway issue, thereby securing output characteristics, life, and stability.

[Brief Description of Drawings]

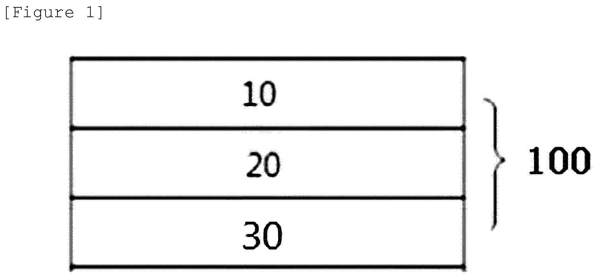

FIG. 1 is a view showing a stack structure of a negative electrode for a lithium secondary battery according to an exemplary embodiment of the present application.

<Explanation of Reference Numerals and Symbols>

10:     negative electrode active material layer
20:     coating layer
30:     negative electrode current collector layer
100:    negative electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight.

In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms and is not limited to the following descriptions.

An exemplary embodiment of the present specification provides a negative electrode for a lithium secondary battery, including: a negative electrode current collector layer; and a negative electrode active material layer provided on one surface or both surfaces of the negative electrode current collector layer; wherein one surface or both surfaces of the negative electrode current collector layer include a coating layer, and the coating layer includes a coating layer composition, and includes 95 parts by weight or more of lithium titanium oxide represented by Formula 1 based on 100 parts by weight of the coating layer composition.

[Formula 1] $Li_aTi_bO_c$

in Formula 1,

a is an integer of 1 to 4,
b is an integer of 1 to 5, and
c is an integer of 2 to 14.

According to the present application, 95 parts by weight or more of lithium titanium oxide based on 100 parts by weight of the coating layer composition is included. The lithium titanium oxide itself has a melting point of 1500°C or higher and exhibits high thermal stability, so it can be stable even at high temperatures and can prevent and control the alloy formation reaction of Li-Si-Cu, thereby addressing the inherent thermal stability issues of silicon-based negative electrodes.

FIG. 1 is a view showing a stack structure of a negative electrode for a lithium secondary battery according to an exemplary embodiment of the present application. Specifically, a negative electrode 100 for a lithium secondary battery can be seen which includes a coating layer 20 and a negative electrode active material layer 30 on one surface of a negative electrode current collector layer 10. FIG. 1 shows that the negative electrode active material layer and the coating layer are formed on one surface, but the negative electrode active material layer and the coating layer may also be formed on both surfaces of the negative electrode current collector layer. In a case where the coating layer is included on both surfaces, when at least one coating layer includes the composition of the coating layer according to the present application, the other coating layer may be a coating layer used in the art.

Below, the negative electrode for a lithium secondary battery of the present invention will be described in more detail.

In an exemplary embodiment of the present application, the negative electrode current collector layer generally has a thickness of 1 μm to 100 μm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material and may be used in various forms such as a film, a sheet, a foil, a net, a porous body, a foamed body, or a non-woven fabric body.

More specifically, the negative electrode current collector layer may include copper.

In an exemplary embodiment of the present application, a thickness of the negative electrode current collector layer may be 1 μm or greater and 100 μm or less.

In another exemplary embodiment, the thickness of the negative electrode current collector layer may be 1 μm or greater and 100 μm or less, specifically 2 μm or greater and 50 μm or less, and more specifically 5 μm or greater and 25 μm or less.

However, the thickness may be variously modified depending on a type and a use of negative electrode used and is not limited thereto.

In the case of negative electrodes for a lithium secondary battery in the related art, a negative electrode active material layer is coated directly on one surface of the negative electrode current collector layer. In particular, the silicon-based active material layer exhibits excellent capacity characteristics but suffers from low stability due to the aforementioned thermal runaway issue, making it difficult to apply in a lithium secondary battery.

Accordingly, the negative electrode for a lithium secondary battery according to an exemplary embodiment of the present application includes a coating layer on one surface or both surfaces of the negative electrode current collector layer, and in particular, the coating layer includes a coating layer composition, and includes 95 parts by weight or more of lithium titanium oxide based on 100 parts by weight of the coating layer composition.

In an exemplary embodiment of the present application, the coating layer may include 95 parts by weight or more, preferably 97 parts by weight or more, and more preferably 99 parts by weight or more of lithium titanium oxide, and 100 parts by weight or less of lithium titanium oxide based on 100 parts by weight of the coating layer composition.

In an exemplary embodiment of the present application, there is provided the negative electrode for a lithium secondary battery, in which the coating layer composition is composed of lithium titanium oxide. The fact that the coating layer composition is composed of lithium titanium oxide may mean that the 100 parts by weight of lithium titanium oxide based on 100 parts by weight of the coating layer composition is included.

In the related art, lithium titanium oxide, a binder, and a conductive material were mixed together and applied to facilitate the coating. When a lithium secondary battery is driven and a cell is exposed to high temperatures, decomposition easily occurs if the content of lithium titanium oxide is low due to the binder and the conductive material being included together. This causes the negative electrode current collector layer and the negative electrode active material layer to come into contact with each other, forming a Si-Cu alloy after decomposition, which accelerates the exothermic reaction and leads to a thermal runaway issue.

However, the coating layer according to an exemplary embodiment of the present application includes lithium titanium oxide within the above range as described above. In particular, the lithium titanium oxide has a melting point of 1500°C or higher, and thus can minimize direct contact between the negative electrode active material layer and the negative current collector layer even in the event of the cell runaway, thereby delaying and suppressing the alloy reaction of Si-Cu, leading to enhanced thermal stability.

Therefore, the lithium titanium oxide according to an exemplary embodiment of the present application, particularly the lithium titanium oxide with a spinel or garnet structure has a high melting point of 1500°C or higher. The coating layer composed of lithium titanium oxide with the spinel or garnet structure is directly coated on a Cu foil, which serves as a negative electrode current collector layer, making it possible to suppress the alloy formation reaction between Li and Si, and consequently, suppress the thermal runaway.

In an exemplary embodiment of the present application, there is provided the negative electrode for a lithium secondary battery in which a thickness of the coating layer is 0.1 $\mu$m or greater and 5 $\mu$m or less.

In another exemplary embodiment, the thickness of the coating layer may be 0.1 $\mu$m or greater and 5 $\mu$m or less, preferably 0.5 $\mu$m or greater and 4 $\mu$m or less, and more preferably 1 $\mu$m or greater and 3 $\mu$m or less.

The thickness of the coating layer is within the above range. If the thickness is less than the range, the negative electrode current collector layer and the negative electrode active material layer may come into contact with each other in the event of thermal runaway, making it difficult to control thermal runaway. If the thickness exceeds the range, it may lead to issues with negative electrode capacity and rapid charging. That is, when the thickness is within the range, the capacity and rapid charging performance of the negative electrode can be secured, while thermal runaway can also be easily prevented.

In an exemplary embodiment of the present application, the lithium titanium oxide may be represented by Formula 1 above.

In the present application, a is an integer of 1 to 4, specifically, an integer of 2 to 4, or an integer of 3 or 4.

In the present application, b is an integer of 1 to 5, specifically an integer of 3 to 5, or an integer of 4 or 5.

In the present application, c is an integer of 2 to 14, an integer of 5 to 13, or an integer of 8 to 12.

In an exemplary embodiment of the present application, the lithium titanium oxide may be represented by $Li_4Ti_5O_{12}$.

In the present application, lithium titanium oxide is applied in a high-voltage lithium secondary battery and offers the advantages of ensuring thermal stability and being favorable for high-voltage cell operation due to the composition described above.

In an exemplary embodiment of the present application, there is provided the negative electrode for a lithium secondary battery in which the lithium titanium oxide has a melting point of 1500°C or higher.

In another exemplary embodiment, the melting point of the lithium titanium oxide may be 1500°C or higher, preferably 1510°C or higher, and more preferably 1515°C or higher and 2000°C or lower.

As the lithium titanium oxide has the melting point within the range, the coating layer maintains its shape without melting in the event of thermal runaway, thereby preventing direct contact between the negative electrode current collector layer and the negative electrode active material layer and ensuring the stability of the cell. In this case, the melting point as described above can be controlled by changing the composition and structure of lithium titanium oxide, and specifically, can be determined by a content of Ti contained in the lithium titanium oxide. That is, Ti acts as a central atom in lithium titanium oxide, and as the content of Ti increases, the melting point can also increase.

In an exemplary embodiment of the present application, there is provided the negative electrode for a lithium secondary battery in which the lithium titanium oxide has a spinel or garnet structure.

In the present application, the spinel structure may refer to a cubic close-packed arrangement of oxygen ions with cations occupying both octahedral and tetrahedral sites.

In spinel structure compounds, O (oxygen) ions form an octahedron like in layered structure compounds, and transition metal ions are present inside the octahedron. Li ions and metal ions are present at tetrahedral and octahedral positions, respectively, and Li ions are inserted into the octahedral sites. Such structural features give spinel structure compounds three-dimensional Li ion diffusion channels. Spinel structure compounds have the advantage of allowing for Li ion intercalation in various directions due to the three-dimensional Li ion diffusion channels but have a relatively lower Li ion diffusion rate within the spinel structure than layered structure compounds due to the complex Li ion diffusion channels.

The lithium titanium oxide according to an exemplary embodiment of the present application has a spinel structure, which results in lower interlayer voltage. Accordingly, dendrites are not formed, and lithium ions can be stably absorbed. In addition, the lithium titanium oxide is well-suited for application in negative electrodes for lithium secondary batteries due to its excellent thermal stability, chemical stability, and mechanical strength.

In addition, in an exemplary embodiment of the present application, the lithium titanium oxide has a spinel structure and a melting point of 1500°C or higher, preferably 1510°C or higher, and more preferably 1515°C or higher, and 2000°C or lower. The lithium titanium oxide with the spinel structure may have a melting point of 1520°C, for example.

The lithium titanium oxide with a spinel structure according to an exemplary embodiment of the present application has a high melting point, and the coating layer composed of the lithium titanium oxide with the spinel structure is directly coated on a Cu foil, which serves as a negative electrode current collector layer, making it possible to suppress an alloy formation reaction between Li and Si, and consequently, suppress the thermal runaway.

In an exemplary embodiment of the present application, the negative electrode active material layer includes a negative electrode active material layer composition including a silicon-based active material, a negative electrode conductive material, and a negative electrode binder.

In an exemplary embodiment of the present application, there is provided the negative electrode for a lithium secondary battery in which the silicon-based active material includes one or more selected from the group consisting of SiOx (x=0), SiOx (0<x<2), SiC, and a Si alloy.

In an exemplary embodiment of the present application, the silicon-based active material may include one or more selected from the group consisting of SiOx (x=0) and SiOx (0<x<2), and may include the SiOx (x=0) in an amount of 95 parts by weight or more based on 100 parts by weight of the silicon-based active material.

In an exemplary embodiment of the present application, the silicon-based active material may include one or more selected from the group consisting of SiOx (x=0) and SiOx (0<x<2), and may include SiOx (x=0) in an amount of 95 parts by weight or more, preferably 97 parts by weight or more, and more preferably 99 parts by weight or more, and 100 parts by weight or less, on the basis of 100 parts by weight of the silicon-based active material.

In an exemplary embodiment of the present application, pure silicon (Si) particles may be particularly used as the silicon-based active material. The use of pure silicon (Si) as the silicon-based active material may mean that, based on 100 parts by weight of the total silicon-based active material as described above, pure Si particles (SiOx (x=0)) not bonded to other particles or elements are included within the above range.

In an exemplary embodiment of the present application, the silicon-based active material may be composed of SiOx (x=0).

The negative electrode for a lithium secondary battery according to the present application includes the above-described silicon-based active material in the negative electrode active material layer, and specifically, includes pure silicon particles containing 95 parts by weight or more of SiOx (x=0). In this case, when a high content of pure silicon particles is included, the capacity characteristics are excellent, and in order to solve the resultant thermal runaway issue, the coating layer of the present invention is included.

Note that an average particle diameter (D50) of the silicon-based active material of the present invention may be 3 $\mu$m to 10 $\mu$m, specifically 4 $\mu$m to 8 $\mu$m, and more specifically 5 $\mu$m to 7 $\mu$m. When the average particle diameter is within the above range, a specific surface area of the particles is within a suitable range, so that the viscosity of the negative electrode slurry is formed within an appropriate range. Accordingly, the particles constituting the negative electrode slurry are smoothly dispersed. In addition, when the size of the first negative electrode active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. Note that, when the average particle diameter satisfies the above range, excessively large silicon particles are excluded, so that a surface of the negative electrode is formed smooth. Accordingly, a current density non-uniformity phenomenon during charging and discharging can be prevented.

In the negative electrode for a lithium secondary battery according to an exemplary embodiment of the present application, a porosity of the negative electrode active material layer satisfies 50% or greater.

In an exemplary embodiment of the present application, the porosity of the negative electrode active material layer may be 50% or greater, and preferably 60% or greater, and may satisfy 90% or less, and preferably 80% or less.

The porosity control described above affects the overall composition and content of the negative electrode active material layer composition, but the D50 particle size of the silicon-based active material included in the negative electrode active material layer composition mainly affects.

In an exemplary embodiment of the present application, there is provided the negative electrode for a lithium secondary battery in which the D50 particle size of the silicon-based active material included in the negative electrode active material layer is 5 $\mu$m or greater.

By satisfying the ranges of particle size distribution and porosity, respectively, the negative electrode for a lithium secondary battery according to an exemplary embodiment of the present application meets the porosity within the range, allowing for simplification of the pore structure, thereby improving diffusion resistance by mitigating the phenomenon where lithium ions and silicon-based active material concentratedly react on the surface.

In an exemplary embodiment of the present application, the silicon-based active material generally has a characteristic BET surface area. The BET surface area of the silicon-based active material is preferably 0.1 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or may be present in the form of a silicon-containing film or coating.

In an exemplary embodiment of the present application, the silicon-based active material may have a non-spherical shape, and its sphericity (circularity) is, for example, 0.9 or less, for example, 0.7 to 0.9, for example 0.8 to 0.9, and for example 0.85 to 0.9.

In the present application, the sphericity (circularity) is determined by Formula 2 below, in which A is an area and P is a boundary line.

[Formula 2]

$$4\pi A/P^2$$

In an exemplary embodiment of the present application, the silicon-based active materials may be included in an amount of 80 parts by weight or more, on the basis of 100 parts by weight of the negative electrode active material layer composition.

In another exemplary embodiment, the silicon-based active material may be included in an amount of 80 parts by weight or more, and preferably 85 parts by weight or more, and 99 parts by weight or less, preferably 97 parts by weight or less, and more preferably 95 parts by weight or less on the basis of 100 parts by weight of the negative electrode active material layer composition.

The negative electrode active material layer composition according to the present application uses a silicon-based active material having a significantly high capacity within the above-described range, improving capacity characteristics. In particular, the range of the silicon-based active material included in the negative electrode active material layer is adjusted to the range described above, so that the problems of surface deterioration during charging and discharging, life characteristics, and securing a conductive path are solved without deteriorating capacity performance of the negative electrode.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

In addition, in order to adjust the porosity range as described above, when a silicon-based active material of a certain particle size is included within the above-described range, a conductive path is not secured due to volume expansion during charging and discharging, so output characteristics are deteriorated, and life characteristics are deteriorated accordingly.

Accordingly, in an exemplary embodiment of the present application, the negative electrode conductive material may include one or more selected from the group consisting of a point-like conductive material, a linear conductive material, and a planar conductive material.

In an exemplary embodiment of the present application, the negative electrode conductive material may use materials that can be generally used in the art without limitation, and specifically, is selected from the group consisting of a point-like conductive material, a planar conductive material, and a linear conductive material.

In an exemplary embodiment of the present application, the point-like conductive material refers to a conductive material that may be used for improving conductivity of the negative electrode, has conductivity without causing a chemical change and has a point-like or spherical shape. Specifically, the point-like conductive material may be one or more selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 m$^2$/g or greater and 70 m$^2$/g or less, preferably 45 m$^2$/g or greater and 65 m$^2$/g or less, and more

preferably 50 m$^2$/g or greater and 60 m$^2$/g or less.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 μm to 7 μm, specifically 3 μm to 6 μm, and more specifically 4 μm to 5 μm. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 μm or greater and 1.5 μm or less, D50 of 2.5 μm or greater and 3.5 μm or less, and D90 of 7.0 μm or greater and 15.0 μm or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m$^2$/g or greater.

In another exemplary embodiment, the planar conductive material may have a BET specific surface area of 5 m$^2$/g or greater and 500 m$^2$/g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode and can form more smoothly a conductive network in the negative electrode to improve the conductivity of the negative electrode.

In an exemplary embodiment of the present application, the negative electrode conductive material may be included in an amount of 0.01 part by weight or more and 40 parts by weight or less, on the basis of 100 parts by weight of the negative electrode active material layer composition.

In another exemplary embodiment, the negative electrode conductive material may be included in an amount of 0.01 part by weight or more and 40 parts by weight or less, preferably 0.1 part by weight or more and 30 parts by weight or less, and more preferably 0.5 part by weight or more and 25 parts by weight or less, on the basis of 100 parts by weight of the negative electrode active material layer composition.

In an exemplary embodiment of the present application, when the negative electrode conductive material includes a linear conductive material solely, the linear conductive material may be included in an amount of 0.01 part by weight or more and 5 parts by weight or less, on the basis of 100 parts by weight of the negative electrode active material layer composition.

In another exemplary embodiment, when the negative electrode conductive material includes a linear conductive material solely, the linear conductive material may be included in an amount of 0.01 part by weight or more and 5 parts by weight or less, preferably 0.03 part by weight or more and 3 parts by weight or less, and more preferably 0.1 part by weight or more and 2 parts by weight or less, on the basis of 100 parts by weight of the negative electrode active material layer composition.

In an exemplary embodiment of the present application, the negative electrode conductive material includes a point-like conductive material, a planar conductive material, and a linear conductive material, and a ratio of the point-like conductive material: the planar conductive material: the linear conductive material may be 1:1:0.01 to 1:1:1.

In an exemplary embodiment of the present application, the point-like conductive material may be included in an amount of 1 part by weight or more and 60 parts by weight or less, preferably 5 parts by weight or more and 50 parts by weight or less, and more preferably 10 parts by weight or more and 50 parts by weight or less, on the basis of 100 parts by weight of the negative electrode conductive material.

In an exemplary embodiment of the present application, the planar conductive material may be included in an amount of 1 part by weight or more and 60 parts by weight or less, preferably 5 parts by weight or more and 50 parts by weight or less, and more preferably 10 parts by weight or more and 50 parts by weight or less, on the basis of 100 parts by weight of the negative electrode conductive material.

In an exemplary embodiment of the present application, the linear conductive material may be included in an amount of 0.01 part by weight or more and 10 parts by weight or less, preferably 0.05 part by weight or more and 8 parts by weight or less, and more preferably 0.1 part by weight or more and 5 parts by weight or less, on the basis of 100 parts by weight of the negative electrode conductive material.

In an exemplary embodiment of the present application, the negative electrode conductive material may include a linear conductive material and a planar conductive material.

In an exemplary embodiment of the present application, the negative electrode conductive material may include a linear conductive material and a planar conductive material, and a ratio of the linear conductive material to the planar conductive material may be 0.01:1 to 0.1:1.

In the exemplary embodiment of the present application, as the negative electrode conductive material particularly includes the linear conductive material and the planar conductive material and the composition and ratio described above are satisfied, respectively, the life characteristics of an existing lithium secondary battery are not significantly affected, and the number of points where charging and discharging are possible increases, so that output characteristics are excellent at a high C-rate.

The negative electrode conductive material according to the present application has a completely different configuration from a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity and is completely different from the negative electrode conductive material that is applied together with the silicon-based active material as in the present invention, in terms of configuration and role.

In an exemplary embodiment of the present application, the negative electrode binder may be included in an amount of 1 part by weight or more and 20 parts by weight or less, on the basis of 100 parts by weight of the negative electrode active material layer composition.

In another exemplary embodiment, the negative electrode binder may be included in an amount of 1 part by weight or more and 20 parts by weight or less, preferably 2 parts by weight or more and 15 parts by weight or less, and more preferably 3 parts by weight or more and 15 parts by weight or less, on the basis of 100 parts by weight of the negative electrode active material layer composition.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure in volume expansion and relaxation of the negative electrode silicon-based active material. When such roles are satisfied, all of the general binders can be applied. Specifically, an aqueous binder may be used, and more specifically, a PAM-based binder may be used.

In an exemplary embodiment of the present application, there is provided the negative electrode for a lithium secondary battery in which a thickness of the negative electrode current collector layer is 1 $\mu$m or greater and 100 $\mu$m or less and a thickness of the negative electrode active material layer is 20 $\mu$m or greater and 500 $\mu$m or less.

An exemplary embodiment of the present application provides a method for manufacturing a negative electrode for a lithium secondary battery, the method including the steps of: preparing a negative electrode current collector layer; forming a coating layer on one surface or both surfaces of the negative electrode current collector layer; and forming a negative electrode active material layer on top of the negative electrode current collector layer on which the coating layer is formed, wherein the step of forming the coating layer includes electrolyzing lithium titanium oxide represented by Formula 1 above to make it into an ionic state; and reducing the lithium titanium oxide in the ionic state on a surface of the negative electrode current collector layer.

As described above, forming the coating layer through electrolysis allows for a uniform coating without including materials such as a conductive material and a binder, unlike the related art, and thus ensures that the content of lithium titanium oxide described above is satisfied. That is, in the related art, the content of lithium titanium oxide was reduced, and the contents of the conductive material and binder were increased to facilitate coating. However, in the present application, the content of lithium titanium oxide is increased in order to prevent thermal runaway, and coating is facilitated by the manufacturing method described above.

In an exemplary embodiment of the present application, the step of forming the coating layer includes, more specifically, dissolving and dispersing the lithium titanium oxide powder in an electrolyte solution, electrolyzing the solution to make the lithium titanium oxide into an ionic state, and then laminating and reducing the lithium titanium oxide in its ionic state onto a negative electrode current collector (for example, Cu foil) by heating of 60°C to 80°C and pressing, thereby enabling formation of the coating layer independently, without the use of a conductive material or binder.

In an exemplary embodiment of the present application, the negative electrode slurry including the negative electrode active material layer composition may be coated on one surface or both surfaces of the current collector to form a negative electrode for a lithium secondary battery.

More specifically, there is provided the method for manufacturing a negative electrode for a lithium secondary battery, in which the step of forming a negative electrode active material layer on the negative electrode current collector layer on which the coating layer is formed includes preparing a negative electrode active material layer composition including a silicon-based active material, a negative electrode conductive material, and a negative electrode binder; forming a negative electrode slurry by including a slurry solvent in the negative electrode active material layer composition; and applying the negative electrode slurry on top of the negative electrode current collector layer on which the coating layer is formed.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode active material layer composition included in the negative electrode slurry, and may mean a content of the negative electrode active material layer composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

An exemplary embodiment of the present application provides a lithium secondary battery including a positive electrode; the negative electrode for a lithium secondary battery according to the present application; a separator provided between the positive electrode and the negative electrode; and an electrolyte.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \le c1 \le 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \le c2 \le 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \le c3 \le 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

The lithium secondary battery according to the present invention is useful for portable devices such as mobile phones, laptop computers and digital cameras, and electric vehicles such as hybrid electric vehicles (HEVs) and can be preferably used as a component battery of a medium and large sized battery module, particularly. Accordingly, the present invention provides a medium and large sized battery module including the lithium secondary battery described above as a unit battery.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**\<Examples\>**

**\<Preparation of Negative Electrode\>**

**Example 1: Preparation of Negative Electrode**

A negative electrode active material layer composition was prepared using Si (average particle diameter (D50): 8 $\mu$m) as a silicon-based active material, SWCNT, and polyacrylamide as a binder in a weight ratio of 89:1:10. A negative electrode slurry (solid concentration: 25 wt%) was prepared by adding the composition to distilled water as a solvent for formation of a negative electrode slurry.

As a mixing method, the SWCNT, the binder, and the water were dispersed at 2500 rpm for 30 minutes by using a homo mixer, and then the active material was added and dispersed therein at 2500 rpm for 30 minutes to manufacture a slurry.

Lithium titanium oxide was electrolyzed and made into an ionic state, and then reduced on a surface of a Cu foil current collector with a thickness of 8 $\mu$m as a negative electrode current collector to form a coating layer (2 $\mu$m). Then, the negative electrode slurry was coated onto the negative electrode current collector layer, on which the coating layer was formed, with a loading amount of 2.75 mg/ cm², which was then roll-pressed and dried in a vacuum oven at 130°C for 10 hours to form a negative electrode active material layer (thickness: 33 $\mu$m), resulting in preparation of a negative electrode (porosity: 55%).

Negative electrodes were manufactured in the same manner as in Example 1, except that, in Example 1, the coating layer was changed as shown in Table 1 below.

[Table 1]

| | Coating layer composition (structure) | Melting point (°C) of lithium titanium oxide | Thickness (μm) of coating layer |
|---|---|---|---|
| Example 1 | $Li_4Ti_5O_{12}$ (spinel structure) | 1520 | 2 |
| Example 2 | $Li_4Ti_5O_{12}$ | 1520 | 1 |

| | | (spinel structure) | | |
|---|---|---|---|---|
| | Example 3 | $Li_4Ti_5O_{12}$ (spinel structure) | 1520 | 3 |
| | Example 4 | $Li_4Ti_5O_{12}$ (garnet structure) | 1700 | 2 |
| | Example 5 | $Li_4Ti_5O_{12}$ (spinel structure) | 1520 | 6 |
| | Example 6 | $Li_4Ti_5O_{12}$ (NASICON structure) | 1200 | 2 |
| | Comparative Example 1 | - | - | - |
| | Comparative Example 2 | $Li_4Ti_5O_{12}$: Denk a black: PVdF = 94:4:2 | 1520 | 2 |
| | Comparative Example 3 | Carbon | 1100 or higher | 2 |

In Table 1, Comparative Example 1 corresponds to a case where a coating layer was not formed, Comparative Example 2 corresponds to a case where $Li_4Ti_5O_{12}$, Denka black, and PVdF were mixed in a ratio of 94:4:2, NMP as a solvent was added, and the slurry was coated on the surface of a Cu foil current collector with a thickness of 8 μm as a negative electrode current collector, and Comparative Example 3 corresponds to a case where carbon was coated on the surface of a Cu foil current collector with a thickness of 8 μm as a negative electrode current collector. In Table 1, the lithium titanium oxides of Examples 1 to 3, 5 and Comparative Example 2 had $Li_4Ti_5O_{12}$ with a spinel structure, the lithium titanium oxide of Example 4 had $Li_4Ti_5O_{12}$ with a garnet structure, and the lithium titanium oxide of Example 6 had $Li_4Ti_5O_{12}$ with a NASICON structure.

<Preparation of Secondary Battery>

A positive electrode slurry (solid concentration: 78 wt%) was prepared by adding $LiNi_{0.6}Co_{0.2}Mn_{0.2}O_2$ (average particle diameter (D50): 15 um) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.
The positive electrode slurry was coated onto both surfaces of an aluminum current collector (thickness: 12 um) serving as a positive electrode current collector with a loading amount of 537 mg/25 $cm^2$, which was then roll-pressed and dried in a vacuum oven at 130°C for 10 hours to form a positive electrode active material layer (thickness: 65 μm), resulting in preparation of a positive electrode (thickness of positive electrode: 77 μm, porosity: 26%).
A lithium secondary battery was manufactured by interposing a polyethylene separator between the positive electrode and the negative electrode of the Examples and the Comparative Examples and injecting an electrolyte.
The electrolyte was obtained by adding vinylene carbonate to an organic solvent, in which fluoroethylene carbonate (FEC) and diethyl carbonate (DMC) were mixed at a volume ratio of 10:90, in an amount of 3 wt% based on a total weight of the electrolyte and adding $LiPF_6$ as a lithium salt to a concentration of 1M.

**<Experimental Example>**

**Experimental Example 1: Safety Evaluation Results**

A safety evaluation was conducted on secondary batteries including the negative electrodes prepared in the Examples and Comparative Examples.
The safety evaluation was conducted using the cell-to-cell propagation (closed system) method. This method corresponds to a method involving stacking four cells (SOC100) in a jig that simulates a module, and then artificially inducing thermal runaway in the first cell by applying intense heat with a heating pad.
The cell adjacent to the pad was defined as number 1, the cell farthest away was defined as number 4, the time from when the voltage of number 1 is just before 0 V to when the voltage of number 4 reaches V=0 was considered as the total time of CTCP (cell to cell propagation), and it was evaluated that the longer this time, the higher the stability. The results are shown in Table 2 below.

[Table 2]

|  | CTCP time |
|---|---|
| Example 1 | 60s |
| Example 2 | 57s |
| Example 3 | 70s |
| Example 4 | 80s |
| Example 5 | 50s |
| Example 6 | 45s |
| Comparative Example 1 | 34s |
| Comparative Example 2 | 30s |
| Comparative Example 3 | 30s |

The negative electrode for a lithium secondary battery according to an exemplary embodiment of the present application is formed by electrolysis so as to include 95 parts by weight or more of lithium titanium oxide in the coating layer, without the use of a binder or conductive material. That is, lithium titanium oxide is electrolyzed and made into an ionic state, and then reduced on the surface of the negative electrode current collector to form a coating layer. As a result, it could be seen from Examples 1 to 6 that through this manufacturing method, a coating layer made of lithium titanium oxide can be formed, and thus the thermal runaway issue in a silicon-based negative electrode can be addressed. For reference, when comparing Examples 1, 4 and 6, the effect depending on the melting point of lithium titanium oxide can be compared. In this case, it could be seen that Example 4 was more effective in addressing the thermal runaway issue compared to Example 1. In addition, it could be confirmed that Example 6, while superior to the Comparative Examples due to its lower melting point than Example 1, showed lower thermal stability compared to Example 1. Additionally, in Example 5 where the thickness of the coating layer was formed greater than in Example 1, it could be confirmed that the thermal stability rather decreased due to the increased resistance of the cell.

In Tables 1 and 2, Comparative Example 1 corresponds to a case where a coating layer of lithium titanium oxide according to the present application was not used, Comparative Example 2 corresponds to a case where lithium titanium oxide was mixed with a binder and a conductive material, and the mixture was coated on a negative electrode current collector layer, and Comparative Example 3 corresponds to a case where a carbon coating was used instead of a coating of lithium titanium oxide.

In the case of Comparative Examples 1 to 3, it could be confirmed that when the cell was exposed to high temperatures, decomposition easily occurred, and the formation of an alloy of Si and Cu after decomposition could not be controlled, accelerating the exothermic reaction and lowering the thermal stability.

As a result, it could be confirmed that through the tests as described above, the negative electrode for a lithium secondary battery according to the present invention maximizes the capacity characteristics and energy density by using the silicon-based active material, and uses the coating layer including lithium titanium oxide through a specific manufacturing process in order to address the thermal runaway issue, thereby securing output characteristics, life, and stability.

## Claims

1.    A negative electrode for a lithium secondary battery, comprising:

a negative electrode current collector layer;
a negative electrode active material layer provided on one surface or both surfaces of the negative electrode current collector layer,
wherein one surface or both surfaces of the negative electrode current collector layer comprise a coating layer, and
wherein the coating layer comprises a coating layer composition, and comprises 95 parts by weight or more of lithium titanium oxide represented by Formula 1 based on 100 parts by weight of the coating layer composition.

[Formula 1]            $Li_aTi_bO_c$

in Formula 1,

a is an integer of 1 to 4,
b is an integer of 1 to 5, and
c is an integer of 2 to 14.

2. The negative electrode for a lithium secondary battery of claim 1, wherein a thickness of the coating layer is 0.1 $\mu$m or greater and 5 $\mu$m or less.

3. The negative electrode for a lithium secondary battery of claim 1, wherein the coating layer composition is composed of lithium titanium oxide.

4. The negative electrode for a lithium secondary battery of claim 1, wherein a melting point of the lithium titanium oxide is 1500°C or higher.

5. The negative electrode for a lithium secondary battery of claim 1, wherein the lithium titanium oxide has a spinel or garnet structure.

6. The negative electrode for a lithium secondary battery of claim 1, wherein the negative electrode active material layer comprises a negative electrode active material layer composition comprising a silicon-based active material, a negative electrode conductive material, and a negative electrode binder, and
wherein the silicon-based active material comprises one or more selected from the group consisting of SiOx (x=0), SiOx (0<x<2), SiC, and a Si alloy.

7. The negative electrode for a lithium secondary battery of claim 6, wherein the silicon-based active material comprises one or more selected from the group consisting of SiOx (x=0) and SiOx (0<x<2) and comprises 95 parts by weight or more of the SiOx (x=0) on based on 100 parts by weight of the silicon-based active material.

8. The negative electrode for a lithium secondary battery of claim 6, wherein the silicon-based active material is included in an amount of 80 parts by weight or more based on 100 parts by weight of the negative electrode active material layer composition.

9. The negative electrode for a lithium secondary battery of claim 6, wherein the negative electrode conductive material comprises one or more selected from the group consisting of a point-like conductive material, a linear conductive material, and a planar conductive material.

10. The negative electrode for a lithium secondary battery of claim 1, wherein a thickness of the negative electrode current collector layer is 1 $\mu$m or greater and 100 $\mu$m or less, and
wherein a thickness of the negative electrode active material layer is 20 $\mu$m or greater and 500 $\mu$m or less.

11. A method for manufacturing a negative electrode for a lithium secondary battery, the method comprising:

preparing a negative electrode current collector layer;
forming a coating layer on one surface or both surfaces of the negative electrode current collector layer; and
forming a negative electrode active material layer on top of the negative electrode current collector layer on which the coating layer is formed,
wherein the forming the coating layer comprises electrolyzing lithium titanium oxide represented by Formula 1 to make it into an ionic state; and reducing the lithium titanium oxide in the ionic state on a surface of the negative electrode current collector layer.

[Formula 1]     $Li_aTi_bO_c$

in Formula 1,

a is an integer of 1 to 4,
b is an integer of 1 to 5, and
c is an integer of 2 to 14.

12. The method of claim 11, wherein the forming the negative electrode active material layer on top of the negative electrode current collector layer on which the coating layer is formed comprises:

preparing a negative electrode active material layer composition comprising a silicon-based active material, a negative electrode conductive material, and a negative electrode binder;
forming a negative electrode slurry by including a slurry solvent in the negative electrode active material layer composition; and
applying the negative electrode slurry on top of the negative electrode current collector layer on which the coating layer is formed.

13. A lithium secondary battery comprising:

a positive electrode;
the negative electrode for a lithium secondary battery of any one of claims 1 to 10;
a separator provided between the positive electrode and the negative electrode; and
an electrolyte.

[Figure 1]

## INTERNATIONAL SEARCH REPORT

| International application No. |
| --- |
| **PCT/KR2024/009933** |

| A. | CLASSIFICATION OF SUBJECT MATTER |
| --- | --- |

**H01M 4/66**(2006.01)i; **H01M 4/134**(2010.01)i; **H01M 4/48**(2010.01)i; **H01M 4/62**(2006.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/66(2006.01); H01M 10/05(2010.01); H01M 10/052(2010.01); H01M 10/0585(2010.01); H01M 4/04(2006.01); H01M 4/13(2010.01); H01M 4/139(2010.01); H01M 4/1391(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (anode), 코팅층 (coating layer), 리튬티탄산화물 (Lithium Titanium Oxide, LTO), 전기분해 (electrolysis), 열폭주 (thermal runaway)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105304859 A (BYD CO., LTD.) 03 February 2016 (2016-02-03)<br>See abstract; paragraphs [0022], [0023], [0025]-[0030], [0038] and [0039]; and claims 1, 2, 4 and 13. | 1-10,13 |
| Y | | 11-12 |
| Y | KR 10-2015-0014875 A (LG CHEM, LTD.) 09 February 2015 (2015-02-09)<br>See abstract; paragraphs [0038]-[0044]; and claims 1 and 7-8. | 11-12 |
| A | KR 10-2022-0078485 A (TOYOTA JIDOSHA KABUSHIKI KAISHA) 10 June 2022 (2022-06-10)<br>See abstract; paragraphs [0039]-[0041]; and claims 1-3. | 1-13 |
| A | JP 2021-197302 A (TOYOTA MOTOR CORP.) 27 December 2021 (2021-12-27)<br>See abstract; paragraph [0040]; and claim 1. | 1-13 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 October 2024** | **27 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/009933** |

### C. DOCUMENTS CONSIDERED TO BE RELEVANT

| Category* | Citation of document, with indication, where appropriate, of the relevant passages | Relevant to claim No. |
| --- | --- | --- |
| A | CN 104577039 A (SHANDONG SHENGONG HETER ELECTRONIC TECHNOLOGY CO., LTD.) 29 April 2015 (2015-04-29)<br>See abstract; and claims 1-6. | 1-13 |

Form PCT/ISA/210 (second sheet) (July 2022)

## INTERNATIONAL SEARCH REPORT
### Information on patent family members

International application No.

**PCT/KR2024/009933**

| Patent document cited in search report | | | Publication date (day/month/year) | Patent family member(s) | | | Publication date (day/month/year) |
|---|---|---|---|---|---|---|---|
| CN | 105304859 | A | 03 February 2016 | CN | 105304859 | B | 21 December 2018 |
| KR | 10-2015-0014875 | A | 09 February 2015 | CN | 105229825 | A | 06 January 2016 |
| | | | | CN | 105229825 | B | 19 October 2018 |
| | | | | EP | 2985816 | A1 | 17 February 2016 |
| | | | | EP | 2985816 | B1 | 02 September 2020 |
| | | | | JP | 2016-521906 | A | 25 July 2016 |
| | | | | JP | 6370885 | B2 | 08 August 2018 |
| | | | | KR | 10-1592993 | B1 | 15 February 2016 |
| | | | | KR | 10-1722996 | B1 | 04 April 2017 |
| | | | | KR | 10-2016-0016986 | A | 15 February 2016 |
| | | | | US | 2016-0149220 | A1 | 26 May 2016 |
| | | | | US | 9899682 | B2 | 20 February 2018 |
| | | | | WO | 2015-016563 | A1 | 05 February 2015 |
| KR | 10-2022-0078485 | A | 10 June 2022 | CN | 114613940 | A | 10 June 2022 |
| | | | | CN | 114613940 | B | 04 August 2023 |
| | | | | EP | 4009395 | A2 | 08 June 2022 |
| | | | | EP | 4009395 | A3 | 22 June 2022 |
| | | | | EP | 4009395 | B1 | 18 October 2023 |
| | | | | JP | 2022-088945 | A | 15 June 2022 |
| | | | | JP | 7484683 | B2 | 16 May 2024 |
| | | | | KR | 10-2698856 | B1 | 27 August 2024 |
| | | | | US | 11984585 | B2 | 14 May 2024 |
| | | | | US | 2022-0181609 | A1 | 09 June 2022 |
| | | | | US | 2024-0234703 | A1 | 11 July 2024 |
| JP | 2021-197302 | A | 27 December 2021 | None | | | |
| CN | 104577039 | A | 29 April 2015 | CN | 104577039 | B | 16 November 2016 |

Form PCT/ISA/210 (patent family annex) (July 2022)

**REFERENCES CITED IN THE DESCRIPTION**

**Patent documents cited in the description**

- KR 1020230090369
- JP 2009080971 A